# EUROPÄISCHE PATENTSCHRIFT

(11) **EP 2 257 723 B1**
(45) Veröffentlichungstag und Bekanntmachung des Hinweises auf die Patenterteilung: **26.10.2011**
(21) Anmeldenummer: 09713763.2
(22) Anmeldetag: 13.02.2009
(51) Int. Cl.: F16H 63/48

(54) **GETRIEBESPERRVORRICHTUNG**
GEARING LOCKING DEVICE
DISPOSITIF DE BLOCAGE DE BOITE DE VITESSES

(30) Priorität: 26.02.2008 DE 102008011115
(43) Veröffentlichungstag der Anmeldung: 08.12.2010
(73) Patentinhaber: Schaeffler Technologies GmbH & Co. KG, 91074 Herzogenaurach (DE)
(72) Erfinder: MASSINI, Stanislav, 90579 Langenzenn (DE)
(86) Internationale Anmeldenummer: PCT/EP2009/001009
(87) Internationale Veröffentlichungsnummer: WO 2009/106238

(56) Entgegenhaltungen:
- DE-A1- 10 144 063
- DE-A1-102004 037 982
- FR-A- 2 475 663
- KR-B1- 100 622 388
- US-A- 3 952 838
- US-A- 5 630 339
- US-A1- 2007 158 161

## Beschreibung

### Gebiet der Erfindung

Die Erfindung richtet sich auf eine unter Einschluss eines schwenkbewegbar gelagerten Klinkenarms gefertigte Getriebesperrvorrichtung, insbesondere zur Realisierung einer Parksperre eines Automatikgetriebes.

### Hintergrund der Erfindung

Aus der gattungsgemäßen EP 0 823 359 A1 ist eine Parksperre für ein Automatikgetriebe bekannt, die als solche einen schwenkbewegbar gelagerten und mit einem Arretierrad in Eingriff bringbaren Klinkenarm aufweist. Dieser Klinkenarm kann über eine Stützmechanik aus einer Freigabeposition in eine Eingriffsposition geschwenkt werden, wobei in jener Eingriffsposition eine an dem Klinkenarm ausgebildete Rastklinke mit seitens des Arretierrads vorgesehenen Rastausnehmungen in Eingriff steht. Die Stützmechanik umfasst ein mittels einer Schieberstange verschiebbares Auslenkorgan. Dieses Auslenkorgan kann zur Verlagerung des Klinkenarms in die genannte Eingriffsposition über ein Rampenelement geschoben werden. Im Rahmen der Verschiebung des Auslenkorgans entlang des Rampenelements wird das Auslenkorgan durch das Rampenelement quer zur Schieberichtung verlagert und gegen den Klinkenarm gedrängt. Der derart durch das Auslenkorgan belastete Klinkenarm wird dabei in die Eingriffsposition geschwenkt.

Aus DE 20 65 758 ist ebenfalls eine Parksperre für ein Fahrzeuggetriebe bekannt. Auch diese Parksperre umfasst einen schwenkbewegbar in eine Sperrstellung verlagerbaren Klinkenarm. Bei Erreichen jener Sperrstellung gelangt der Klinkenarm mit einem Arretierrad des Fahrzeuggetriebes in Eingriff und verhindert eine Drehung desselben.

Aus EP 0 143 604 B1 ist eine Parksperre für ein Automatikgetriebe bekannt, die ähnlich wie die vorangehend beschriebenen Parksperren einen schwenkbewegbar verlagerbaren Klinkenarm aufweist, der mit einem Arretierrad in Eingriff bringbar ist. Zum Schwenken des Klinkenarms ist ein Konuselement vorgesehen, das in einem, einem Rastklinkenabschnitt des Klinkenarms abgewandten Bereich derart über den Klinkenarm schiebbar ist, dass durch dieses Konuselement der Klinkenarm in eine Eingriffsposition abgedrängt werden kann. Die Verschiebung dieses Konuselementes erfolgt in einer zur Schwenkachse des Klinkenarms Im wesentlichen parallelen Richtung.

Aus DE 101 01 363 C1 ist eine weitere Parksperre für ein Kraftfahrzeuggetriebe bekannt, die einen aus einer Freigabeposition in eine Sperrstellung schwenkbaren Klinkenarm aufweist. Zum Schwenken des Klinkenarms in die vorgenannte Sperrstellung ist ein mit einer Laufrolle versehener Hebel vorgesehen, durch welchen diese Laufrolle in eine den Hebel in Sperrposition abdrängende Position verlagerbar ist.

### Aufgabe der Erfindung

Der Erfindung liegt die Aufgabe zugrunde, eine Getriebesperrvorrichtung zu schaffen die unter fertigungs- und montagetechnischen Gesichtspunkten Vorteile gegenüber herkömmlichen Konstruktionen bietet und sich durch eine hohe Robustheit und vorteilhafte Funktionseigenschaften auszeichnet.

### Erfindungsgemäße Lösung

Diese Aufgabe wird erfindungsgemäß gelöst durch eine Cetriebesperrvorrichtung zum selektiven Sperren eines Getriebeabschnitts, mit:
- einem Klinkenarm der einen um eine Schwenkachse schwenkbaren Schwenklagerabschnitt und eine von der Schwenkachse beabstandete Rastklinke aufweist und um jene Schwenkachse K1 aus einer Freigabestellung in eine Sperrstellung schwenkbar ist, wobei in jener Sperrstellung die Rastklinke mit einer durch ein Sperrrad bereitgestellten Sperrstruktur in Eingriff tritt,
- einer Stützmechanik zur Aufbringung einer den Klinkenarm in der Sperrstellung haltenden Stützkraft, und
- einem Schwenkhebelelement, zum Betätigen der Stützmechanlk,
- wobei die Stützmechanik (M) ein Klemmstück (6) umfasst, das zwischen einer Rückzugsnosition (R) und einer Sperrposition (S) verlagerbart ist, derart, dass die Schwenkhebelelementachse (H1) und die Klinkenarmschwenkachse (K1) identisch sind.

Dadurch wird es auf vorteilhafte Weise möglich, eine Getriebesparrvorrichtung zum selektiven Sperren eines Getriebeabschnitts, insbesondere zur Realisierung einer Parksperre eines KfZ-Automatikgetriebes zu schaffen, die sich durch einen besonders kompakten, belastbaren und kostengünstig realisierbaren Aufbau auszeichnet.

Gemäß einer besonders bevorzugten Ausführungsform der Erfindung kann der Klinkenarm hierbei unmittelbar auf einem Achszapfen gelagert sein, der als solcher das Schwenkhebelelement trägt. Dieser Achszapfen ist vorzugsweise so ausgebildet, dass dieser eine in dem Klinkenarm ausgebildete Lagerbohrung durchsetzt und in seinem hierbei über die Seitenfläche des Klinkenarms überstehenden Abschnitt drehfest mit dem Schwenkhebelelement gekoppelt ist. Diese drehfeste Koppelung des Achszapfens mit dem Schwenkhebelelement wird vorzugsweise durch komplementär an dem Achszapfen und

dem Schwenkhebelelement ausgebildete Verzahnungs- oder Mitnehmerstrukturen bewerkstelligt. Diese Mitnehmerstruktur kann insbesondere als zur Schwenkmomentubertragung hinreichend große Abflachung ausgebildet sein. Der auf Grundlage des erfindungsgemäßen Konzeptes sowohl zum Schwenken des Schwenkhebelelementes, als auch zur schwenkbewegbaren Lagerung des Klinkenarms herangezogene Achszapfen ist vorzugsweise so dimensioniert, dass dieser den über das Sperrrad in den Klinkenarm eingeleiteten Sperrkräften sicher standhält. Der Klinkenarm kann auch so ausgebildet sein, dass dieser nach Einrasten in das Sperrrad noch mit anderweitigen, stationären Eingriffsstrukturen in Eingriff tritt, so dass etwaige über das Sperrrad in den Klinkenarm eingeleitete Kräfte zumindest Teilweise unter Umgehung der Klinkenarmlagerung In jene stationären Eingriffsstrukturen eingeleitet werden.

Der sowohl der Lagerung des Klinkeharms als auch der Lagerung des Schwenkhebelelementes dienende Achszapfen ist vorzugsweise über Gleitlagerbuchsen leichtgängig und hinreichend belastbar in einem entsprechenden Abschnitt eines Getriebegehäuses oder eines an dieses Getriebegehäuse angebauten Bauteils gelagert.

Die Stutzmechanik ist so ausgebildet, dass diese ein Klemmstück umfasst, das zwischen einer Rückzugsposition und einer Sperrposition verlagerbar, insbesondere verschiebbar ist. Die Verlagerung des Klemmstücks zwischen der Rückzugsposition und der Sperrposition erfolgt vorzugsweise unter Verwendung eines Schiebers, der einerseits mit dem Klemmstück und andererseits mit dem Schwenkhebelelement gekoppelt ist. Das Klemmstück ist vorzugsweise auf einem durch den Schieber bereitgestellten Führungsabschnitt translatorisch geführt. Der dem Klemmstück abgewandte Endbereich des Schiebers ist vorzugsweise über einen Gelenkbolzen mit dem Schwenkhebelelement schwenkbewegbar gekoppelt. Zur Übertragung der das Klemmstück in die Sperrposition drängenden Stellkraft ist vorzugsweise eine als Schraubenfeder ausgebildete und auf den Schieber aufgesetzte Feder vorgesehen, die als solche eine durch das Schwenkhebelelement generierte Steilkraft auf das Klemmstück überträgt. Durch dieses Konzept wird es möglich, In Fällen, in welchen aufgrund der Winkelstellung des Arretierrads die Rastklinke nicht unmittelbar in die zugeordnete Rastausnehmung eintauchen kann, das Schwenkhebelelement dennoch in die Arretierstellung zu schwenken und das Klemmstück mit einer dieses in die Sperrposition drängenden Federkraft zu beaufschlagen. Sobald aufgrund einer geringen Weiterdrehung des Arretierrades die an dem Klinkenarm ausgebildete Rastklinke mit der Rastausnehmung übereinkommt, kann das Klemmstück in jene Sperrposition abwandem und die an dem Klinkenarm ausgebildete Rastklinke in die entsprechende Rastausnehmung des Sperrrades einschnappen.

Das Abdrängen des Klemmstückes auf den Klinkenarm erfolgt vorzugsweise durch eine relativ steif ausgebildete Abstützstruktur, die als solche eine das Klemmstück in der vorgenannten Sperrstellung abstützende Stützfläche bildet. Diese Abstützstruktur kann so ausgebildet sein, dass diese eine das Klemmstück sanft in die Sperrstellung führende, gekrümmte Kurven- oder Rampenfläche bildet. Diese Abstützstruktur kann unmittelbar durch einen mechanisch ausreichend tragfesten Abschnitt eines Getriebegehäuses gebildet sein. Vorzugsweise jedoch wird die Abstützstruktur unter Einschluss eines verschleißbeständigen Klemmblechteiles gebildet, das auf eine dieses Klemmblechteil tragende Gegenstruktur aufsetzbar, insbesondere aufschraubbar oder aufnietbar ausgeführt ist.

Die erfindungsgemäße Sperrvorrichtung ist vorzugsweise so ausgebildet, dass der Klinkenarm an sich unter Verwendung einer Federeinrichtung in eine Freigabestellung vorgespannt ist. Diese Federeinrichtung kann insbesondere durch eine Schenkelfeder gebildet sein, die einerseits an dem Klinkenarm und andererseits an einer stationären Komponente angreift.

Die erfindungsgemäße Sperreinrichtung umfasst vorzugsweise ein Gehäuseelement, das an einen entsprechend vorbereiteten Abschnitt eines Getriebes, insbesondere Automatikgetriebes, in abdichtender Weise ansetzbar ist. Über dieses Gehäuseelement ist die erfindungsgemäße Sperrvorrichtung vorzugsweise zu einer vormontierten Baugruppe zusammengefasst. Es ist auch möglich, die erfindungsgemäße Spenvorrichtung ohne ein derartiges Gehäuseelement zu realisierten. Die Komponenten der Sperreinrichutng können dann unmittelbar Im Getriebegehäuse untergebracht werden. Die Abstützung der Sperrkraft und der Schenkelfeder, Lagerung der Achse, und Positionierung des Klemmbleches hierbei im Getriebegehäuse. Die unmittelbare Unterbringung der Sperrvorrichtung unter Verzicht auf ein Anbaugehäuseelement eignet sich insbesondere für Getriebekonstruktionen bei welchen eine besonders hohe Steifigkeit des Hauptgehäuses gefordert wird, oder Baurumeinschränkungen bestehen. Auch bei Verzicht auf das separate Gehäuse ist es möglich die Sperreinrichtung als zumindest weitgehend vormontierte Baugruppe, insbesondere Sperreinsatzmechanik auszuführen. Hierzu ist es insbesondere möglich, ein beispielsweise als Tiefziehteil gefertigtes Einsatzteil vorzusehen das die Rampen- oder Kurvenfläche der Ausrückstruktur bereitstellt und sich zudem bis zum Lagerungsbereich des Achszapfens erstreckt. Über dieses Einsatzteil kann insbesondere ein Lagerbuchsenabschnitt bereitgestellt werden in welchem die gesamte Lagerstruktur zur Lagerung und Abdichtung der Achszapfendurchführung aufgenommen ist. Durch dieses Konzept wird es möglich die Kompatibilität der Sperrvorrichtung zum Gesamtgetriebe im wesentlichen über die Geometrie des Einsatz- oder Trägerteils zu schaffen. Hierdurch wird es möglich, die Sperreinrichtung zuverlässig an verschiedene Getriebevarianten und Änderungen in der Serie anzupassen. Zudem wird es möglich, sensible Montagevorgänge wie insbesondere die Ausbildung der Achszapfendichtung und die Einführung des Achszapfens im Rahmen der Vormontage der Baugruppe vorzunehmen.

### Kurzbeschreibung der Figuren

Weitere Einzelheiten und Merkmale der Erfindung ergeben sich aus der nachfolgenden Beschreibung in Verbindung mit der Zeichnung. Es zeigt:
- **Figur 1**: eine Draufsicht auf eine erfindungsgemäBe Getriebespenvorrichtung mit einem zur Fixierung eines getriebeseitig bereitgestellten Arretierrads vorgesehenen Klinkenarm,
- **Figur 2a**: eine perspektivische Darstellung der Getriebesperrvorrichtung nach Figur 1 zur Veranschaulichung weiterer konstruktiver Einzelheiten derselben,
- **Figur 2b**: eine weiter perspektivische Darstellung der Getriebesperrvorrichtung nach Figur 1 in einem Zustand bei welchem sich der Klinkenarm in Sperrstellung befindet,
- **Figur 3**: eine Axial-Schnittansicht zur Veranschaulichung des Aufbaus der Getriebesperrvorrichtung nach den Figuren 1 und 2 im Bereich eines den Klinkenarm lagernden und das Schwenkhebelelement tragenden Achszapfens,
- **Figur 4**: eine perspektivische Detaildarstellung zur Veranschaulichung einer Variante zur drehfesten Koppelung des Schwenkhebelelementes mit dem, den Klinkenarm schwenkbewegbar lagernden Achszapfen,
- **Figur 5**: eine perspektivische Darstellung zur Veranschaulichung eines bevorzugten Aufbaus des Gehäuseelementes der erfindungsgemäßen Getriebesperrvorrichtung,
- **Figur 6**: eine weitere perspektivische Darstellung zur Veranschaulichung von Einzelheiten der erfindungsgemäßen Getriebesperrvorrichtung, insbesondere des Aufbaus des Gehäuseelementes und eines zum Schwenken des Achszapfens vorgesehenen Betätigungshebels,
- **Figur 7**: eine Prinzip-Skizze zur Veranschaulichung einer weiteren Variante einer erfindungsgemäßen Getriebesperrvorrichtung mit einem gleichachsig zur Klinkenarmschwenkachse gelagerten Schwenkhebelelement.

### Ausführliche Beschreibung der Figuren

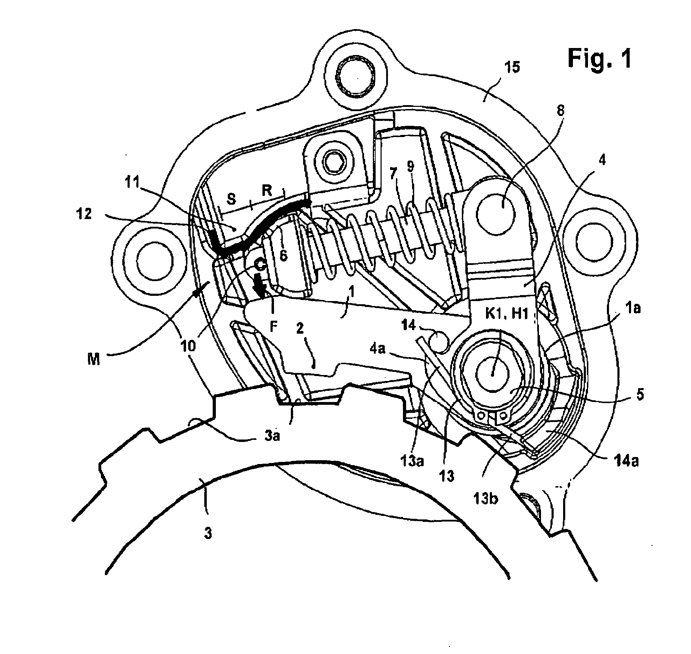

Die in Figur 1 dargestellte Getriebesperrvorrichtung dient als solche als Parksperre für ein Automatikgetriebe und ermöglicht hierbei eine selektive Sperrung eines typischerweise mit einer Getriebeausgangswelle permanent gekoppelten Getriebeabschnitts.

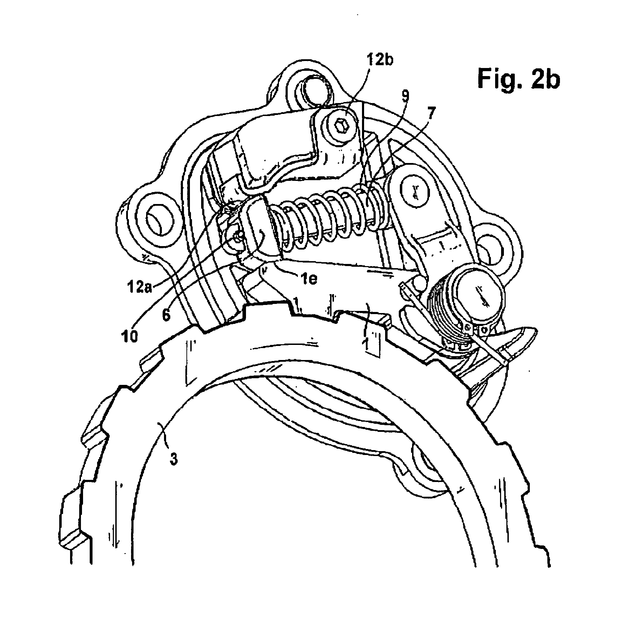

Die erfindungsgemäße Getriebespemrorrichtung umfasst einen Klinkenarm 1, der einen Schwenklagerabschnitt 1a aufweist und über diesen derart schwenkbewegbar gelagert ist, dass der Klinkenarm 1 um eine Klinkenarmschwenkachse K1 aus der hier dargestellten Freigabestellung in eine Sperrstellung schwenkbar ist. In der genannten Sperrstellung (vgl. Figur 2b) befindet sich eine Rastklinke 2 des Klinkenarms 1 in Eingriff mit einer durch ein Sperrrad 3 bereitgestellten, hier Eingriffsausnehmungen 3a bildenden Sperrstruktur.

Die erfindungsgemäße Getriebesperrvorrichtung umfasst weiterhin eine Stützmechanik M zur Aufbringung einer den Klinkenarm 1 in Sperrstellung drängenden bzw. nach Erreichen der Sperrstellung den Klinkenarm 1 in der Sperrstellung haltenden Stützkraft F.

Die Getriebespenvorrichtung umfasst weiterhin ein Schwenkhebelelement 4 zum Betätigen der Stützmechanik M. Die hier gezeigte Getriebespemrorrichtung zeichnet sich dadurch aus, dass das Schwenkhebelelement 4 derart schwenkbewegbar gelagert ist, dass dessen Schwenkhebelachse H1 im Bereich der Schwenkachse K1 des Klinkenarms 1 verläuft, insbesondere mit dieser vollständig übereinkommt.

Durch die vorgenannte Maßnahme wird es möglich, den Klinkenarm 1 auf einem Achszapfen 5 zu lagern, der als solcher das Schwenkhebelelement 4 trägt. Das Schwenkhebelelement 4 ist dabei mit jenem Achszapfen 5 drehfest gekoppelt. Der Klinkenarm 1 kann unmittelbar oder gegebenenfalls unter Einbindung einer Lagerbuchse auf dem Achszapfen 5 gelagert sein.

Die erfindungsgemäße Stützmechanik umfasst ein Klemmstück 6, das zwischen der hier dargestellten Rückzugsposition R in eine Sperrposition S verlagerbar ist, in welcher dieses die Rastklinke 2 des Klinkenarms 1 mit dem Sperrrad 3 in Eingriff bringt.

Zur Verlagerung des Klemmstücks 6 zwischen der Rückzugsposition R und der Sperrposition S ist ein Schieber 7 vorgesehen, der mit dem Schwenkhebelelement 4 über einen Gelenkzapfen 8 schwenkbewegbar gekoppelt ist. Das Klemmstück 6 Ist auf dem Schieber 7 axial verschiebbar geführt. Zwischen dem Schwenkhebelelement 4 und dem Klemmstück 6 ist eine Stützfeder 9 vorgesehen, die Im wesentlichen der Kraftübertragung von dem Schwenldiebelelement 4 auf das Klemmstück 6, dient. Das Klemmstück 6 ist auf dem vorgenannten Schieber 7 bewegbar geführt. Das Klemmstück 6 ist auf dem Schieber 7 ferner durch einen Stift 10 gesichert, sodass dieses unter Wirkung der Feder 9 nicht von dem Schieber 7 abgeschoben werden kann. Alternativ zu der hier gezeigten Sicherungsvariante vermittels des Stifts 10 ist es auch möglich anderweitige Sicherungssturkuren, insbesondere durch plastische Umformung oder anderweitige, ggf. auch unter Einschluss des Klinkenarms bereitgestellte Halte und Anschlaggeometrien so zu sichern, dass das Klemmstück 6 daran gehindert wird, den Schieber 7 zu verlassen. Die Aufbringung der den Klinkenarm 1 in Sperrstellung schwenkenden Kraft F erfolgt indem das Klommstück 6 gegenüber einer Rampen- oder Abstützstruktur 11 verschoben wird. Diese Abstützstruktur 1 bzw. bei dem hier gezeigten Ausführungsbeispiel ein in diese Abstützstruktur 11 eingebundenes Klemmblechteil 12 bildet eine das Klemmstück 6 abstützende und führende Rampen- oder Kurvenfläche.

Der Klinkenarm 1 ist bei dem hier gezeigten Ausführungsbeispiel durch eine Federeinrichtung 13 in die hier gezeigte Freigabestellung vorgespannt. An dem Klinkenarm 1 ist hierzu ein Mitnehmerstift 14 ausgebildet, an welchem der hier erkennbare Schenkel 13a der Schwenkfeder 13 angreift. Diese Schwenkfeder 13 umfasst einen weiteren Schenkel 13b, der sich an einer stationären Komponente, insbesondere einem gehäuseseitig vorgesehenen Vorsprung 14a abstützen kann.

Der Mitnehmerstift 14 bildet weiterhin Bestandteil einer Mitnehmermechanik die es erlaubt, über den Schwenkhebel 4 bei Erreichen einer bestimmten Winkelstellung den Klinkenarm 1 aktiv in die hier gezeigte Freigabestellung mitzunehmen und in dieser Position zu sichern. An dem Schwenkhebel 4 ist hierzu eine Mitnehmerstruktur 4a ausgebildet, die als solche mit dem Mitnehmerstift 14 zusammenwirkt und sicherstellt, dass dann, wenn sich der Schwenkhebel 4 in der hier gezeigten Schwenkposition befindet, der Klinkenarm 1 nicht In unzulässiger Weise mit dem Arretierrad 3 in Eingriff treten kann.

Die erfindungsgemäße Getriebesperrvorrichtung umfasst weiterhin ein als Gehäuseelement 15 fungierendes Strukturbauteil, das in abdichtender Weise an eine entsprechende Stelle eines Getriebegehäuses ansetzbar ist. Die Abdichtung des Gehäuseelements 15 kann insbesondere über eine O-Ring Dichtung bewerkstelligt werden. Die Einsatzgeometrie kann unrund ausgeführt sein, so dass eine lagerichtige Positionierung der Spannvorrichtung unmittelbar durch die das Gehäuseelement 15 tragende Komplementärgeometrie sichergestellt ist. Der O-Ring kann insbesondere in einer d-Ringnut, und/oder ggf. auch in einem Eckbereich zu einem Flanschabschnitt sitzen. Es ist auch möglich, an das Gehäuselement eine Dichtunngsstruktur, insbesondere eine elastomere Materiallage stofflich anzubinden, so dass der Dichtungseffekt im Wege der vorzugsweise automatisierten Montage der Sperrvorrichtung zuverlässig sichergestellt ist.

Über das vorgenannte Gehäuseelement 15 wird in vorteilhafter Weise die das Klemmblech 12 tragende Abstützstruktur 11 sowie insbesondere auch die der Lagerung des Achszapfens 5 dienende Lagerbohrung gebildet. Das vorgenannte Gehäuseelement 15 ermöglicht es, die gesamte erfindungsgemäße Sperrvorrichtung als vollständig vormontierte Baugruppe zusammenzufassen. Dieses Gehäuseelement kann insbesondere aus einem Leichtmetall gefertigt sein. Es ist auch möglich, dieses Gehäuseelement als Insert-Molding Bauteil mit einer vorzugsweise als Tiefziehbauteil ausgeführten Einlage auszuführen. Über dieses Tiefziehbauteil wird vorzugsweise die Rampenstruktur 12 und ein zur Ableitung der an dem Achszapfen 5 angreifenden Kräfte geeigneter Lagerabschnitt gebildet. Es ist auch möglich, das Gehäuseelement 15 insgesamt als Blechumform- oder Tiefziehbauteil auszuführen.

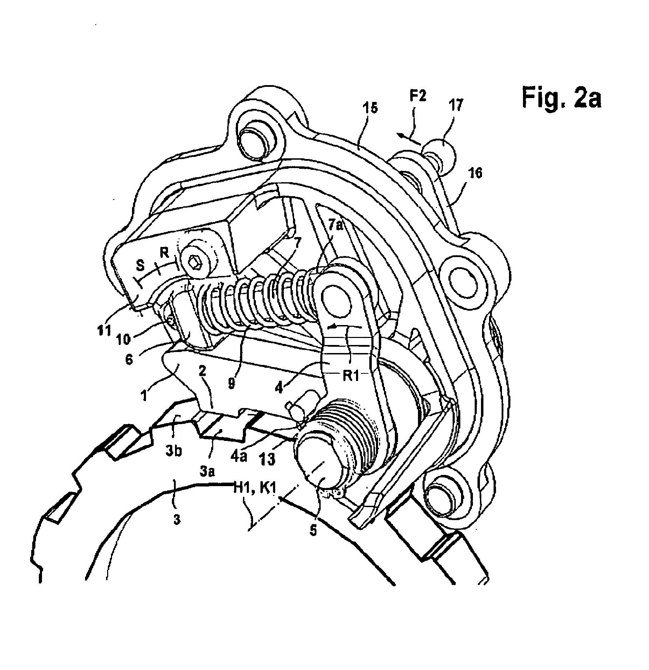

Aus Figur 2a sind weitere konstruktive Einzelheiten der erfindungsgemäßen Getriebesperrvorrichtung erkennbar. Der Achszapfen 5 der als solcher drehfest mit dem Schwenkhebel 4 gekoppelt ist, ist durch das Gehäuseelement 15 schwenkbewegbar hindurchgeführt. Auf einen, dem Schwenkhebel 4 abgewandten Endabschnitt des Achszapfens 5 ist ein Betätigungshebel 16 aufgesetzt, über welchen die erfindungsgemäße Getriebesperrvorrichtung von außen betätigt werden kann. Wird beispielsweise in den an dem Betätigungshebel 16 ausgebildeten Kugelkopf 17 eine in der hier gezeigten Richtung wirkende Kraft F2 eingeleitet, so wird der Schwenkhebel 4 in die hier gezeigte Schwenkrichtung R1 geschwenkt. Hierbei wird die auf das Klemmstück 6 wirkende Feder 9 belastet und das Klemmstück 6 entlang der Abstützstruktur 11 aus der hier gezeigten Rückzugsposition R in die Sperrposition S gedrängt. Im Rahmen der Verlagerung des Klemmstücks 6 entlang der Abstützstruktur 11 wird der Klinkenarm 1 um die zur Schwenkhebelschwenkachse H1 koaxiale Ktinkenarmschwenkachse K1 geschwenkt bis die Rastklinke 2 des Klinkenarms 1 mit der durch das Sperrrad 3 bereitgestellten Rastausnehmung 3a in Eingriff tritt.

Für den Fall, dass die Sperrklinke 2 nicht unmittelbar in die entsprechende Rastausnehmung 3a eintauchen kann, sondern zunächst auf einer Außenumfangsfläche 3b des Sperrrads 3 aufsitzt, wird zunächst der Schieber 7 in dem Klemmstück 6 verschoben und die Feder 9 durch einen, hier noch an dem Schieber 7 ausgebildeten Federauflageabschnitt 7a gestaucht. Das Klemmstück 6 befindet sich dann weiterhin in der Rückzugsposition, jedoch bewirkt die Vorspannung der Feder 9 ein unmittelbares Weiterschnappen des Klemmstücks 6 in die Sperrposition S sobald die Klinke 2 des Klinkenarms 1 nach einem geringen Weiterdrehen des Sperrrades 3 in die unter die Klinke 2 fallende Rastausnehmung 3a eintreten kann.

Zum Entriegeln der erfindungsgemäßen Getriebesperrvorrichtung wird in den Mitnehmerkopf 17 eine der hier dargestellten Kraft F2 entgegenwirkende Lösekraft eingeleitet und damit der Schwenkhebel 4 entgegen der hier durch das Pfeilsymbol R1 angedeuteten Schwenkrichtung geschwenkt. Im Rahmen dieses Schwenkens des Schwenkhebels 4 wird die Stützfeder 9 entlastet und das Klemmstück 6 auch unter Wirkung des Stifts 10, oder auch anderweitige Mitnehmer und aus der Sperrstellung S in die Rückzugsposition gezogen. Unter Wirkung der Federeinrichtung 13 sowie gegebenenfalls auch unter Wirkung der an dem Schwenkhebel 4 ausgebildeten Mitnehmerstruktur 4a wird der Schwenkhebel wieder in die hier dargestellte Freigabestellung zurückgeschwenkt.

Figur 2b veranschaulicht die Position de beweglichen Komponenten der Erfindungsgemäßen Sperrvorrichtung bei Erreichen des Spenzustandes. In diesem Sperrzustand befindet sich die Rastklinke 2 des Klinkenarms 1 mit dem Rastrad 3 in Eingriff. Das Klemmstück 6 befindet sich in der Sperrposition auf der durch die Abstütz struktur 11 gebildeten und dem Klinkenarm 1 zugewandten Kuppe 12a des über eine Schraube 12b fixierten Klemmblechteils 12. Das Klemmstücks 6 wird durch die Stützfeder 9 gegen den am Schieber 7 verankerten Stift 10 gedrängt. Durch den Stift 10 ist bei diesem Ausführungsbeispiel die Endposition des Klemmstücks 6 festgelegt.

An dem Klinkenarm ist eine das Klemmstück 6 kontaktierende Stützflanke 1e ausgebildet. Diese Stützflanke 1e, das Klemmstück 6 und auch die das Klemmstück 6 stützende Kuppenfläche 12a sind so gestaltet, dass die Abstützung des Klinkenarms 1 selbsthemmend ist, so dass etwaige an dem Klinkenarm 1 angreifende Betriebskräfte das Klemmstück 6 nicht aus der hier gezeigten Sperrstellung herausdrängen können.

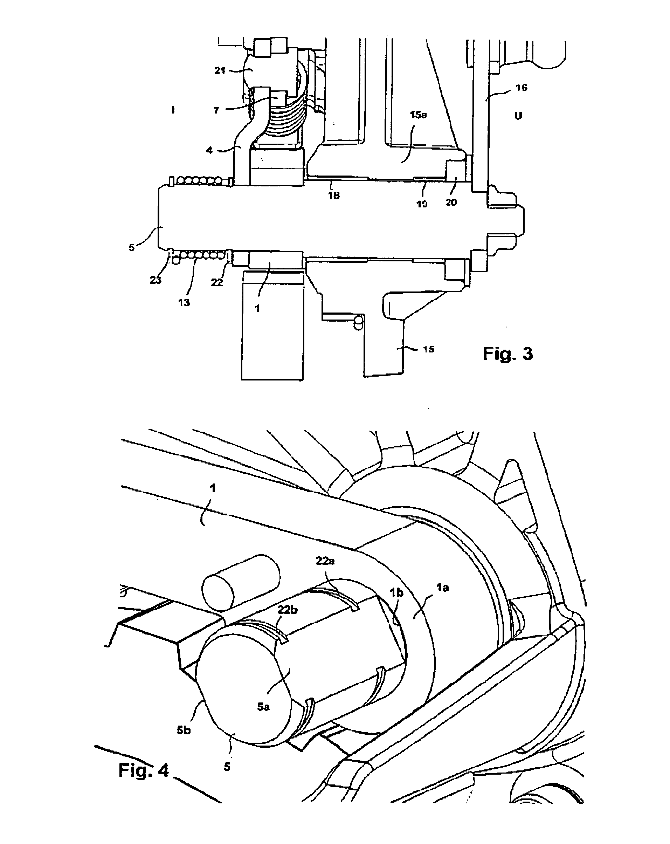

Aus der Darstellung nach Figur 3 ist der weitere Aufbau der erfindungsgemäßen Getriebesperrvorrichtung, insbesondere im Bereich des Achszapfens 5 weiter ersichtlich.

Der Achszapfen 5 ist in einem durch das Gehäuse 15 bereitgestellten Durchführungsabschnitt 15a schwenkbewegbar gelagert. In den Durchführungsabschnitt 15a sind Gleitlagerbuchsen 18, 19 eingesetzt. Zudem ist ein Dichtring 20 vorgesehen, durch welchen der Innenbereich I eines entsprechenden Getriebes gegenüber der äußeren Umgebung U abgedichtet ist. Der Achszapfen 5 ist derart dimensioniert, dass dessen Querkraftübertragungsvermögen ausreicht, um die gegebenenfalls auf den Klinkenarm 1 einwirkenden Sperrkräfte sicher aufzunehmen. Wie aus dieser Darstellung besonders deutlich hervorgeht, bildet der Achszapfen 5 einerseits einen Lagerzapfen zur schwenkbewegbaren Lagerung des Klinkenarms 1 und andererseits auch einen Wellenzapfen durch welchen ein über den äußeren Betätigungshebel 16 eingeleitetes Drehmoment auf das Schwenkhebelelement 4 übertragen werden kann. An das Schwenkhebelelement 4 ist, wie bereits beschrieben, über eine Gelenkverblndung der Schieber 7 angebunden. Bei dem hier gezeigten Ausführungsbeispiel erfolgt diese schwenkbewegbare Anbindung des Schiebers 7 an das Schwenkhebelelement 4 unter Verwendung eines lokal plastisch aufgestauchten Schamierbolzens 21. Alternativ zu der hier gezeigten Variante mit einem durch das Klemmstück 6 hindurch verschiebbaren Abschnitt des Schiebers 7 ist es auch möglich im Bereich der an das Schwenkhebelelement 4 anknüpfenden Gelenkstelle eine Führungsbohrung vorzusehen durch welche der Schieber 7 hindurchtauchen kann. In diesem Falle können das Klemmstück 6 und der Schieber zu einem Integralteil zusammengefasst werden das als solches gegenüber einem an das Schwenkhebelelement 4 angebundenen Gelenkkopf verschiebbar ist. Die Stützfeder 9 sitzt in diesem Falle zwischen dem Klemmstück 6 und dem Gelenkkopf.

Die axiale Sicherung des Klinkenarms 1 und des Schwenkhebelelementes 4 auf dem Achszapfen 5 wird durch Sicherungsringe 22, 23 bewerkstelligt, die In entsprechenden Umfangsnuten des Achszapfens 5 sitzen. Durch den Sicherungsring 23 wird auch die zur Vorspannung des Schwenkhabelelementes 4 in Freigabeposition vorgesehene Federeinrichtung 13 auf dem Achszapfen 5 gesichert.

Der zur Aufnahme des Achszapfens 5 vorgesehene Durchführungsabschnitt 15a des Gehäuses 15 ist ebenfalls derart dimensioniert, dass dieser die unter Wirkung des Klinkenarmes 1 in den Achszapfen gegebenenfalls eingeleiteten Querkräfte sicher aufnehmen kann.

Alternativ zu der hier gezeigten unmittelbaren Lagerung des Klinkenarms 1 auf dem Achszapfen 5 ist es auch möglich, auf den Achszapfen 5 ein Buchsenelement aufzusetzen das abschnittsweise noch in das Gehäuseelement 15 eintaucht und damit eine Querkraftübertragung unter Umgehung des Achszapfens 5 ermöglicht. In diesem Buchsenelement ist der Achszapfen 5 drehbar gelagert, wobei dieses Buchsenelement zumindest einen Teil der in den Klinkenarm 1 einwirkenden Kräfte unmittelbar in den Durchführungsabschnitt 15a überträgt.

Wie aus Figur 4 ersichtlich ist es möglich, den Achszapfen 5 so auszubilden, dass das in dieser Darstellung nicht näher gezeigte Schwenkhebelelement 4 unmittelbar nach Aufsetzen auf den Achszapfen 5 mit diesem drehfest gekoppelt ist. Bei dem hier gezeigten Ausführungsbeispiel ist der Achszapfen 5 hierzu beidseitig mit Abflachungen 5a, 5b versehen. Der Klinkenarm 1 ist durch eine entsprechend dimensionierte Durchgangsbohrung 1b des Schwenklagerabschnitts 1a desselben auf dem Achszapfen 5 schwenkbewegbar gelagert. Die Sicherung des hier nicht näher dargestellten Schwenkhebelelementes 4 erfolgt, wie bereits in Verbindung mit Figur 3 angesprochen, durch Sicherungsringe, die in Umfangsnuten 22a, 22b des Achszapfens 5 axial festgelegt sind.

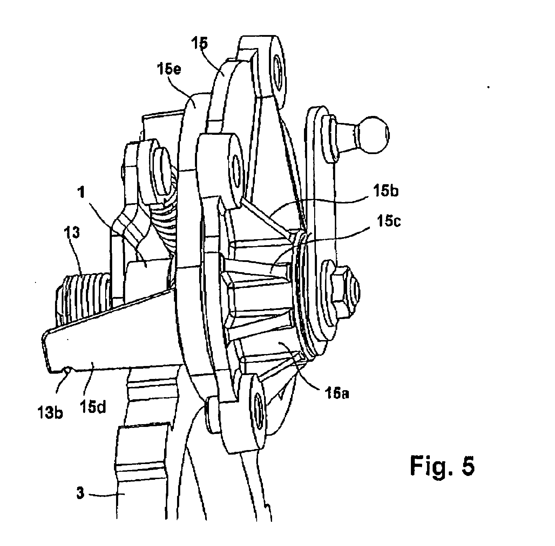

Wie aus Figur 5 ersichtlich, ist das Gehäuseelement 15 als relativ tragfähiges Strukturbauteil ausgebildet. Insbesondere im Bereich des Durchführungsabschnitts 15a ist das Gehäuseelement 15 mit mehreren, in Umfangsrichtung der durch den Durchführungsabschnitt 15 gebildeten Durchgangsöffnung abfolgend ausgebildeten Versteifungsrippen 15b, 15c versehen. Durch diese Versteifungsrippen 15b, 15c wird die Tragfähigkeit des Gehäuseelementes 15 im Bereich des Durchführungsabschnitts 15a deutlich erhöht. An dem Gehäuseelement 15 ist weiterhin eine Stütznase 15d ausgebildet, an welcher der hier erkennbare Federschenkel 13b der den Schwenkhebel 1 in Freigabestellung vorspannenden Feder 13 angreift. Das Gehäuseelement 15 umfasst einen Dichtflansch sowie einen Zentrierrand 15e, durch welchen ein lagerichtiger Einbau des Gehäuseelementes 15 in ein entsprechendes Getriebe sichergestellt ist. Über das Gehäuseelement 15 ist die gesamte, hier dargestellte Anordnung, ausgenommen das hier erkennbare Rastrad 3, zu einer Baueinheit zusammengefasst. Soweit es getriebeseitig möglich ist, kann der Achszapfen 5 so ausgebildet sein, dass dieser noch einen getriebeseitig bereitgestellten Lagerbohrungsabschnitt erfasst. Hierdurch wird es möglich, eine zweiseitige Lagerung des Achszapfens 5 zu bewerkstelligen wodurch die Anforderungen an die Tragfähigkeit des Gehäuseelements 15 verringert werden.

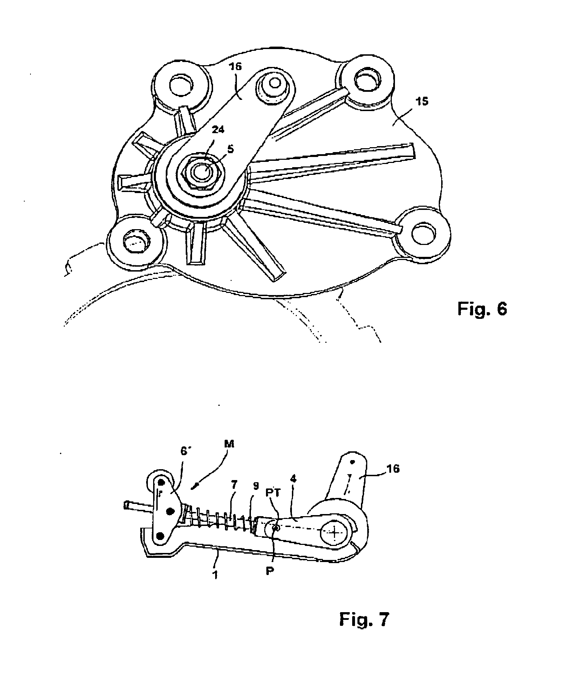

Figur 6 zeigt das Gehäuseelement 15 der erfindungsgemäßen Sperreinrichtung aus einer nochmals anderen Blickrichtung. In dieser Darstellung ist insbesondere auch die Anbindung des Betätigungshebels 16 an den Achszapfen 5 erkennbar. Bei diesem Ausführungsbeispiel sitzt der Betätigungshebel 16 über eine entsprechende Eingriffsstruktur drehfest auf dem Achszapfen 5. Die axiale Sicherung des Betätigungshebels 16 an dem Achszapfen 5 wird durch die hier erkennbare, selbstsichemde Mutter 24 bewerkstelligt.

In Figur 7 ist eine weitere Variante einer erfindungsgemäßen Getriebespenvorrichtung dargestellt. Auch bei diesem Ausführungsbeispiel sind der Klinkenarm 1 und das Schwenkhebelelement 4 gleichachsig gelagert. Die Stützmechanik M umfasst bei diesem Ausführungsbeispiel einen an dem Klinkenarm 1 angelenkten Klemmarm 6', der ähnlich wie bei dem Ausführungsbeispiel nach den Figuren 1 bis 6, über einen Schieber 7 und die Stützfeder 9 geschwenkt werden kann. Bei dem hier gezeigten Ausführungsbeispiel ist es möglich, die Anbindung des Schiebers 9 an das Schwenkhebelelement 4 so zu bewerkstelligen, dass bei Erreichen der Sperrstellung der Gelenkpunkt P einen Totpunkt PT durchläuft und damit unter Wirkung der Stützfeder 9 ein Sichenrngseffekt erreicht wird in welchem das Klemmstück 6' sicher in Sperrstellung gehalten wird. Die Erfindung ist nicht auf die vorangehend beschriebenen Ausführungsbeispiele beschränkt. Beispielsweise ist es möglich, das Schwenkhebelelement 4 nicht auf der dem Gehäuseelement abgewandten Seite des Klinkenarms, sondern zwischen dem Gehäuseelement 15 und dem Klinkenarm 1 anzuordnen. Der Klinkenarm 1 kann auch so ausgebildet und angeordnet sein, dass dieser unmittelbar mit einem Getriebezahnrad in Eingriff bringbar ist. Der Klinkenarm 1 kann auch als Tiefziehbauteil oder auch mehrlagiges Stanzteil ausgeführt sein. Die Rückstellfeder 13 kann auch als Blattfeder ausgeführt, oder auch außerhalb des Getriebegehäuses angeordnet sein sein. Der Klinkenarm 1 kann im Bereich seiner Schwenklagerung auch gegabelt ausgebildet sein, so dass das Schwenkhebelelement 4 zwischen zwei Flanken des Klinkenarms sitzt. Das Schwenkhebelelement 4 kann auch so ausgebildet sein, dass dieses zwei Hebelschenkel bildet, wobei der Klinkenarm 1 zwischen diesen beiden Hebelschenkeln aufgenommen ist.

## Patentansprüche

1. Getriebesperrvorrichtung zum selektiven Sperren eines Getriebeabschnitts, mit:
- einem Klinkenarm (1) der einen um eine Schwenkachse (K1) schwenkbaren Schwenklagerabschnitt (1a) und eine von der Schwenkachse (K1) beabstandete Rastklinke (2) aufweist und um jene Schwenkachse (K1) aus einer Freigabestellung in eine Sperrstellung schwenkbar ist, wobei in jener Sperrstellung die Rastklinke (2) mit einer durch ein Sperrrad (3) bereitgestellten Sperrstruktur in Eingriff tritt,
- einer Stützmechanik (M) zur Aufbringung einer den Klinkenarm (1) in der Sperrstellung haltenden Stützkraft (F), und
- einem Schwenkhebelelemertt (4), zum Betätigen der Stützmechanik (M), wobei die Stützmechanik (M) ein Klemmstück (6) umfasst, das zwischen einer Rückzugsposition (R) und einer Sperrposition (S) verlagerbar ist, **dadurch gekennzeichnet, dass** die Schwenkhebelelementschwenkachse (H1) und die Klinkenarmschwenkachse (K1) identisch sind.

2. Getriebesperrvorchtung nach Anspruch 1, **dadurch gekennzeichnet, dass** der Klinkenarm (1) auf einem Achszapfen (5) gelagert Ist der als solcher das Schwenkhebelelement (4) trägt.

3. Getriebespenvorrichtung nach Anspruch 2, **dadurch gekennzeichnet, dass** das Schwenkhebelelement (4) mit jenem Achszapfen (5) drehfest gekoppelt ist.

4. Getriebesperrvorrichtung nach Anspruch 1, **dadurch gekennzeichnet, dass** zur Vorlagerung des Klemmstücks (6) zwischen der Rückzugsposition (R) und der Sperrposition (S) ein Schieber (7) vorgesehen ist, und dieser Schieber (7) mit dem Schwenkhebelelement (4) gekoppelt ist.

5. Getriebesperrvorrichtung nach Anspruch 4, **dadurch gekennzeichnet, dass** der Schieber (7) mit dem Schwenkhebelelement (4) schwenkbewegbar gekoppelt ist.

6. Getriebesperrvorrichtung nach Ansoruch 1 **dadurch gekennzeichnet, dass** zwischen dem Schwenkhebelelement (4) und dem Klemmstück (6) eine Stützfeder (9) vorgesehen ist.

7. Getriebesperrvorrichtung nach Anspruch 4, **dadurch gekennzeichnet, dass** das Klemmstück (6) auf dem Schieber (7) bewegbar geführt ist.

8. Getriebesperrvorrichtung nach Anspruch 1 **dadurch gekennzeichnet, dass** eine Abstützstruktur (11, 12) vorgesehen ist, zur Bildung einer das Klemmstück (6) in der Sperrstellung abstützenden Stützfläche.

9. Getriebesperrvorrichtung nach Anspruch 8, **dadurch gekennzeichnet, dass** die Abstützstruktur (11, 12) eine das Klemrnstück (6) führende Kurvenoder Rampenflächefläche bildet.

10. Getriebesperrvorrichtung nach Anspruch 8 oder 9. **dadurch gekennzeichnet, dass** die Abstützstruktur (11, 12) unter Einschluss eines Klemmblechteils (12) gebildet ist.

11. Getriebesperrvorrichtung nach Anspruch 1, **dadurch gekennzeichnet, dass** der Klinkenarm (1) in eine Freigabestellung vorgespannt ist.

12. Getriebespenvorrichtung nach Anspruch 1, **dadurch gekennzeichnet, dass** an dem Schwenkhebelelement (4) eine Mitnehmerstruktur (4a) ausgebildet ist, über welche im Rahmen des Herausfahrens des Klemmstücks (6) aus der Sperrstellung (S) ein Herausschwenken des Klinkenarms (1) aus der Sperrstellung in die Freigabestellung bewerkstelligbar ist.

13. Getriebesperrvorrichtung nach Anspruch 12, **dadurch gekennzeichnet, dass** der Klinkenarm (1) mit einem Mitnehmerstift (14) versehen ist, und dass die seitens des Schwenkhebelelements (4) vorgesehenen Mitnehmerstruktur (4a) mit jenem Mitnehmerstift (4) zusammenwirkt.

14. Getriebesperrvorrichtung nach wenigstens einem der Ansprüche 1 bis 13, **dadurch gekenntzeichnet, dass** diese ein Gehäuseelement (15) umfasst, und dass die Sperrvorrichtung unter Einschluss dieses Gehäuseelements (15) zu einer vormontierten Baugruppe zusammengefasst ist

## Claims

1. Transmission locking device for the selective locking of a transmission section, having:
- a pawl arm (1) which has a pivoting-bearing section (1a) which can be pivoted about a pivot axis (K1) and a latching pawl (2) which is spaced apart from the pivot axis (K1), and can be pivoted about that pivot axis (K1) out of a release position into a locking position, the latching pawl (2) engaging in that locking position with a locking structure which is provided by a ratchet wheel (3),
- a supporting mechanism (M) for applying a supporting force (F) which holds the pawl arm (1) in the locking position, and
- a pivoting-lever element (4), for actuating the supporting mechanism (M),
the supporting mechanism (M) comprising a clamping piece (6) which can be displaced between a retracted position (R) and a locking position (S), **characterized in that** the pivoting-lever element pivot axis (H1) and the pawl-arm pivot axis (K1) are identical.

2. Transmission locking device according to Claim 1, **characterized in that** the pawl arm (1) is mounted on an axle journal (5) which per se carries the pivoting-lever element (4).

3. Transmission locking device according to Claim 2, **characterized in that** the pivoting-lever element (4) is coupled fixedly to that axle journal (5) so as to rotate with it.

4. Transmission locking device according to Claim 1, **characterized in that** a slide (7) is provided in order to displace the clamping piece (6) between the retracted position (R) and the locking position (S), and the said slide (7) is coupled to the pivoting-lever element (4).

5. Transmission locking device according to Claim 4, **characterized in that** the slide (7) is coupled to the pivoting-lever element (4) in a pivotably movable manner.

6. Transmission locking device according to Claim 1, **characterized in that** a supporting spring (9) is provided between the pivoting-lever element (4) and the clamping piece (6).

7. Transmission locking device according to Claim 4, **characterized in that** the clamping piece (6) is guided movably on the slide (7).

8. Transmission locking device according to Claim 1, **characterized in that** a supporting structure (11, 12) is provided, in order to form a supporting face which supports the clamping piece (6) in the locking position.

9. Transmission locking device according to Claim 8, **characterized in that** the supporting structure (11, 12) forms a cam or ramp face which guides the clamping piece (6).

10. Transmission locking device according to Claim 8 or 9, **characterized in that** the supporting structure (11, 12) is formed with inclusion of a clamping sheet-metal part (12).

11. Transmission locking device according to Claim 1, **characterized in that** the pawl arm (1) is prestressed into a release position.

12. Transmission locking device according to Claim 1, **characterized in that** a driver structure (4a) is formed on the pivoting-lever element (4), via which driver structure (4a) pivoting of the pawl arm (1) out of the locking position into the release position can be brought about in the course of the moving of the clamping piece (6) out of the locking position (S).

13. Transmission locking device according to Claim 12, **characterized in that** the pawl arm (1) is provided with a driver pin (14), and **in that** the driver structure (4a) which is provided on the pivoting-lever element (4) interacts with that driver pin (4).

14. Transmission locking device according to at least one of Claims 1 to 13, **characterized in that** it comprises a housing element (15), and **in that** the locking device is combined to form a preassembled unit with inclusion of this housing element (15).

## Revendications

1. Dispositif de blocage de boîte de vitesse pour le blocage sélectif d'une partie d'une boîte de vitesse, comprenant :
- un bras de cliquet (1) qui présente une portion de palier pivotant (1a) pouvant pivoter autour d'un axe de pivotement (K1) et un cliquet (2) espacé de l'axe de pivotement (K1), et qui peut pivoter autour dudit axe de pivotement (K1) d'une position de libération dans une position de blocage, le cliquet (2) venant en prise avec une structure de blocage constituée par une roue de blocage (3) dans ladite position de blocage,
- un mécanisme de support (M) pour appliquer une force de support (F) retenant le bras de cliquet (1) dans la position de blocage et
- un élément de levier pivotant (4) pour actionner le mécanisme de support (M), le mécanisme de support (M) comprenant un élément de serrage (6) qui peut être déplacé entre une position de rétraction (R) et une position de blocage (S), **caractérisé en ce que** l'axe de pivotement (H1) de l'élément de levier pivotant et l'axe de pivotement (K1) du bras de cliquet (1) sont identiques.

2. Dispositif de blocage de boîte de vitesse selon la revendication 1, **caractérisé en ce que** le bras de cliquet (1) est monté sur un tourillon (5) qui porte en tant que tel l'élément de levier pivotant (4).

3. Dispositif de blocage de boîte de vitesse selon la revendication 2, **caractérisé en ce que** l'élément de levier pivotant (4) est accouplé de manière solidaire en rotation audit tourillon (5).

4. Dispositif de blocage de boîte de vitesse selon la revendication 1, **caractérisé en ce que** pour le déplacement de l'élément de serrage (6) entre la position de rétraction (R) et la position de blocage (S), on prévoit un coulisseau (7) et ce coulisseau (7) est accouplé à l'élément de levier pivotant (4).

5. Dispositif de blocage de boîte de vitesse selon la revendication 4, **caractérisé en ce que** le coulisseau (7) est accouplé de manière déplaçable par pivotement à l'élément de levier pivotant (4).

6. Dispositif de blocage de boîte de vitesse selon la revendication 1, **caractérisé en ce que** l'on prévoit entre l'élément de levier pivotant (4) et l'élément de serrage (6) un ressort de support (9).

7. Dispositif de blocage de boîte de vitesse selon la revendication 4, **caractérisé en ce que** l'élément de serrage (6) est guidé de manière déplaçable sur le coulisseau (7).

8. Dispositif de blocage de boîte de vitesse selon la revendication 1, **caractérisé en ce qu'**une structure de support (11, 12) est prévue pour former une surface de support supportant l'élément de serrage (6) dans la position de blocage.

9. Dispositif de blocage de boîte de vitesse selon la revendication 8, **caractérisé en ce que** la structure de support (11, 12) forme une surface de came ou de rampe guidant l'élément de serrage (6).

10. Dispositif de blocage de boîte de vitesse selon la revendication 8 ou 9, **caractérisé en ce que** la structure de support (11, 12) est formée en incluant une pièce de serrage en tôle (12).

11. Dispositif de blocage de boîte de vitesse selon la revendication 1, **caractérisé en ce que** le bras de cliquet (1) est précontraint dans une position de libération.

12. Dispositif de blocage de boîte de vitesse-selon la revendication 1, **caractérisé en ce qu'**une structure d'entraînement (4a) est réalisée sur l'élément de levier pivotant (4), par le biais de laquelle dans le cadre du retrait de l'élément de serrage (6) hors de la position de blocage (S), un pivotement du bras de cliquet (1) hors de la position de blocage dans la position de libération peut être mis en oeuvre.

13. Dispositif de blocage de boîte de vitesse selon la revendication 12, **caractérisé en ce que** le bras de cliquet (1) est pourvu d'une goupille d'entraînement (14) et **en ce que** la structure d'entraînement (4a) prévue du côté de l'élément de levier pivotant (4) coopère avec ladite goupille d'entraînement (4a).

14. Dispositif de blocage de boîte de vitesse selon au moins l'une quelconque des revendications 1 à 13, **caractérisé en ce que** celui-ci comprend un élément de boîtier (15) et **en ce que** le dispositif de blocage conjointement avec cet élément de boîtier (15) constitue un module prémonté.
